# EUROPEAN PATENT APPLICATION

(11) **EP 1 748 290 A1**
(43) Date of publication of application: **31.01.2007**
(21) Application number: 05016459.9
(22) Date of filing: 28.07.2005
(51) Int. Cl.: G01L 1/24

(54) **A device and a system for measuring forces**

(71) Applicant: Fondazione Torino Wireless, 10129 Torino (IT); Instituto Superiore Mario Boella, Passo Carraio, 10129 Turin (IT)
(72) Inventor: Perrone, Guido, 13842 Biella (BI) (IT); Abrate, Silvio, 12038 Savigliano (CN) (IT)
(74) Representative: Grünecker, Kinkeldey, Stockmair & Schwanhäusser Anwaltssozietät

(57) **Abstract**

Optical transducers are provided according to the present invention for detecting forces such as, for example rotational and transversal forces acting on them, wherein, for the purpose of detecting said forces, optical signals (4a, 4b) are transmitted through an optical path defined by optical fibers (2a, 2b). Moreover, optical means (3) are provided, adapted to modify the transmission of the optical signals through the optical path, as a result of forces acting on them. The resulting optical signals exiting the transducer are then used for the purpose of detecting the forces acting on the transducer.

## Description

### FIELD OF THE PRESENT INVENTION

The present invention relates to the measurement of forces. In particular, the present invention relates to the measurement of mechanical forces, such as, for example, transversal forces (pressure) and rotational forces (torque). In more detail, the present invention relates to the measurement of forces by using optical transducers. Still in more detail, the present invention relates to the measurement of forces with the use of optical transducers and/or sensors comprising low cost optical fibers and components. Finally, the present invention relates to a device and a system for measuring forces, with said device and system comprising low cost optical transducers and/or sensors.

### DESCRIPTION OF THE PRIOR ART

During the last years, much development work has been devoted to the provision of devices adapted to measure and/or detect mechanical forces in a very reliable manner. Along the devices and systems developed and proposed, systems and devices based on very sophisticated electronic assemblies became the most largely used devices and systems. This, in particular, was due to the fact that the development in the sector of integrated circuits and the corresponding reduction in size of circuits exploiting very complicated functions, allowed the provision of very small electronic transducers, adapted to be used for different purposes and under very difficult conditions. For instance, electronic transducers are known, the size of which is kept less than a few cubic millimeters. Moreover, the last developments in the field of the computing means, in particular, in the field of the software adapted for elaborating very big quantities of data in an always shorter time, allowed the data detected by the electronic transducers to be elaborated in an automatic and reliable manner. Finally, the decreasing costs of electronic systems, allowed to contain the costs for producing electronic transducers, thus allowing said electronic transducers to be used for several purposes and applications.

However, in spite of all the advantages cited above offered by electronic transducers, said electronic transducers are not free from drawbacks, especially when said electronic transducers are to be used for measuring mechanical forces, such as, for example, pressures and torques. The most relevant drawback affecting electronic transducers arises from the fact that electrical current is needed for operating the electronic transducers. In the case of a force acting on an electronic transducer, the electrical current flowing through the transducer is influenced by the force acting on it, so that the variations in the current flow may be detected and used for obtaining an indication of the intensity of the force acting on the transducer.

However, the electrical current flowing through the electronic transducers may also be influenced by the external environment, thus rendering electronic transducers less reliable for applications in critical environments, such as in structures exposed to electrostatic discharges during thunderstorms or in electromagnetically noisy industrial premises. Moreover, it may become difficult or risky to use electronic transducers in storage areas of highly flammable materials. Finally, some types of electronic transducers are also not suitable for biomedical applications because the risk of electrocution may arise.

Accordingly, in view of the problems explained above, it would be desirable to provide a technology that may solve or reduce these problems. In particular, it would be desirable to provide transducers suitable to be used in structures exposed to electrostatic discharges and/or in noisy industrial premises, or even in storage areas of highly flammable materials. In the same way, it would be desirable to provide transducers for measuring and/or detecting forces, suitable to be used for biomedical applications. Furthermore, it would be desirable to provide transducers characterized by low cost, light weight, reduced size and minimal invasiveness. Finally, it would be desirable to provide transducers for the purpose of reliably measuring forces, allowing to be used in combination with low cost, simple and well known equipments.

### SUMMARY OF THE INVENTION

In general, the present invention is based on the consideration that forces, in particular, mechanical forces such as pressure or torque may be measured and/or detected using the variations of light through an optical path caused by a force acting, either directly or indirectly, on said optical path. In particular, the working principle of the present invention exploits the variation in the photo-current detected at the output of an optical path with the link attenuation that is controlled by the force under test. In particular, it has been observed that if optical means are progressively inserted in an optical path as a result of the force under test, with said optical means being adapted to modify the transmission of optical signals through said optical path, the variation in the optical signals transmitted may be efficiently and reliably used for obtaining indications relating to the force under test, such as, for instance, its intensity, direction or the like. This is, in particular, obtained by converting the variations in the optical signals transmitted through the optical path into a measure of current or voltage. Although the detection approach according to the present invention may be quite general in principle, it has been revealed to be very reliable for the purpose of detecting and/or measuring forces, in particular, mechanical forces, such as, for example, pressure or torque. Moreover, when optical fibers are used for the purpose of defining an optical path, advantages arises in terms of costs, besides the advantages common to optical fibers such as light weight, minimal invasiveness, immunity to electromagnetic interferences and the impossibility to start a fire or an explosion. Finally, if very high numerical aperture fibers, such as standard polymer optical fibers (POF) are used, advantages also arise due to the high acceptable gap between facing fibers, the less demanding mechanical tolerances and the possibility to use low cost sources and photodetectors.

On the basis of the considerations as stated above, the first embodiment of the present invention relates to an optical transducer as claimed in claim 1, namely an optical transducer for detecting forces acting on said transducer, said transducer comprising an optical path adapted to transmit optical signals (4a, 4b) therethrough, said optical transducer being characterized in that it comprises moveable means adapted to be moved as a result of a force acting on said optical path so as to modify the transmission of said optical signal through said optical path as a function of their position with respect to said optical path.

According to another embodiment of the present invention, an optical transducer is provided as claimed in claim 3, namely an optical transducer adapted for measuring forces such as, for instance, pressure, wherein said optical path comprises first and second optical fibers disposed consecutively and both adapted to receive and to emit an optical signal, and in that said optical means comprises an optical filter adapted to be reciprocated between said two optical fibers as a result of a transversal force acting on it so as to at least partially absorb the optical signal exiting said first optical fiber as a function of its position in between said first and second fibers.

According to still another embodiment of the present invention, an optical transducer is provided as claimed in claim 6, namely an optical transducer, wherein said optical path comprises one optical fibers and in that said optical means comprise an optical mirror disposed in proximity of one end of said optical fiber, said optical mirror being adapted to be reciprocated in a direction substantially as a result of a force acting on it so as to at least partially reflect the optical signal exiting said optical fiber as a function of its position with respect to said optical fiber.

According to still another embodiment of the present invention, an optical transducer is provided as claimed in claim 7, namely an optical transducer wherein said optical path comprises at least three optical fibers disposed consecutively and each adapted to receive and to emit optical signals and wherein said optical means comprises at least two optical filters, each adapted to be reciprocated in between two consecutive optical fibers, as a result of a force acting on it so as to at least partially absorb the optical signal transmitted through two consecutive optical fibers, as a function of its position in between two consecutive optical fibers.

According to another embodiment of the present invention, an optical transducer is provided as claimed in claim 10, namely an optical transducer wherein said optical path comprises at least two optical fibers disposed consecutively and each adapted to receive and to emit optical signals, and wherein said optical means comprises at least a first and a second optical mirror, said first and second optical mirrors being adapted to be reciprocated in between said two consecutive optical fibers and in proximity to one end of said second optical fiber, respectively, as a function of a force acting on them, so as to at least partially reflect optical signals transmitted through said optical path as a function of their position with respect to said optical fibers.

According to a further embodiment of the present invention, an optical transducer is provided as claimed in claim 12, namely an optical transducer wherein said optical path comprises two consecutive optical fibers and wherein said optical means comprises two optical fibers disposed in between said two optical fibers and firmly fixed to the facing end portions of said optical fibers, respectively, at least one of said two fibers being adapted to be rotated as a result of a force acting on said transducer, so that the transmission of the optical signal through the optical path is modified as a function of the reciprocal position of said two filters.

According to another embodiment as claimed in claim 18, the optical transducer according to the present invention comprises resilient means allowing to exert a reaction force against the force acting on the transducer.

There is also provided a measuring device as claimed in claim 20, namely a measuring device comprising an optical transducer according to the present invention.

Finally, there is also provided a measuring system for measuring forces such as pressure or torque, comprising a measuring device equipped with an optical transducer according to the present invention.

Further, additional embodiments of the present invention are defined in the appended claims.

### BRIEF DESCRIPTION OF THE DRAWINGS

Further advantages, objects and features as well as the embodiments of the present invention are defined in the appended claims and will become more apparent with the following detailed description when taken with reference to the accompanying drawings, in which identical corresponding parts are identified using the same reference numbers. In the drawings:
figures 1a and 1b represent the working principle of an optical transducer according to a first embodiment of the present invention;
figure 1c represents a schematic view of the optical transducer of figures 1a ad 1b received into a resilient sleeve adapted to provide the resilient force against the force acting on the transducer;
figures 2a, 2b and 2c represent a schematic view of the possible optical components adapted to be used in the optical transducer according to the present invention;
figure 3 represents a schematic view of the electrical layout of a measuring device exploiting the transducer of figures 1a and 1b;
figures 3a and 3b represent corresponding schematic views of an emitting and a receiving device, respectively adapted to be used in combination with the optical transducers of the present invention;
figure 4 represents a schematic view of the working principle of an optical transducer according to a second embodiment of the present invention;
in figure 5, there is schematically depicted the electrical layout of a measuring device exploiting the optical transducer of figure 4;
figures 6a and 6b schematically represent the electrical layouts or corresponaing measuring systems exploiting the optical transducers according to the present invention;
in figure 7a, there is schematically depicted the working principle of an optical transducer according to a further embodiment of the present invention;
figure 7b represents a schematic view of the working principle of an optical transducer according to another embodiment of the present invention;
in figure 8a, there is schematically depicted the electrical layout of a measuring device exploiting the optical transducer of figure 7a;
in figure 8b, there is schematically depicted the electrical layout of a measuring device exploiting the optical transducer of figure 7b;
in figures 9a and 9b, there is schematically depicted the working principle of an optical transducer according to a further embodiment of the present invention;
figures 9c and 9d schematically depict the working principle of an optical transducer according to still another embodiment of the present invention;
figures 10a and 10b schematically depict the working principle of an optical transducer according to still a further embodiment of the present invention;
figure 11 relates to a diagram of the electrical signals transmitted through the optical transducer according to one embodiment of the present invention as depicted in figures 10a and 10b; and
figure 12 schematically depicts the electrical layout of a measuring device exploiting the optical transducer of figures 9a, 9b, 10a and 10b.

### DETAILED DESCRIPTION

While the present invention is described with reference to the embodiments as illustrated in the following detailed description as well as in the drawings, it should be understood that the following detailed description, as well as the drawings, are not intended to limit the present invention to the particular illustrative embodiments disclosed, but rather the described illustrative embodiments merely exemplify the various aspects of the present invention, the scope of which is defined by the appended claims.

The present invention is understood to be of particular advantage when used for detecting and/or measuring transversal forces and rotational forces such as, for example, pressures and torques. For this reason, examples will be given in the following, in which corresponding embodiments of the optical transducer according to the present invention are used for detecting and/or measuring pressures and torques. However, it has to be noted that the use of the optical transducers according to the present invention is not limited to the detection and/or measurement of pressure and torques; on the contrary, the optical transducers according to the present invention may also be used for the purpose of measuring and/or detecting different forces acting on them. The present invention is, therefore, also useful for the measurement of all these forces, and the transversal forces (pressure) and/or rotation forces (torque) described in the following are to represent any force acting on the transducers.

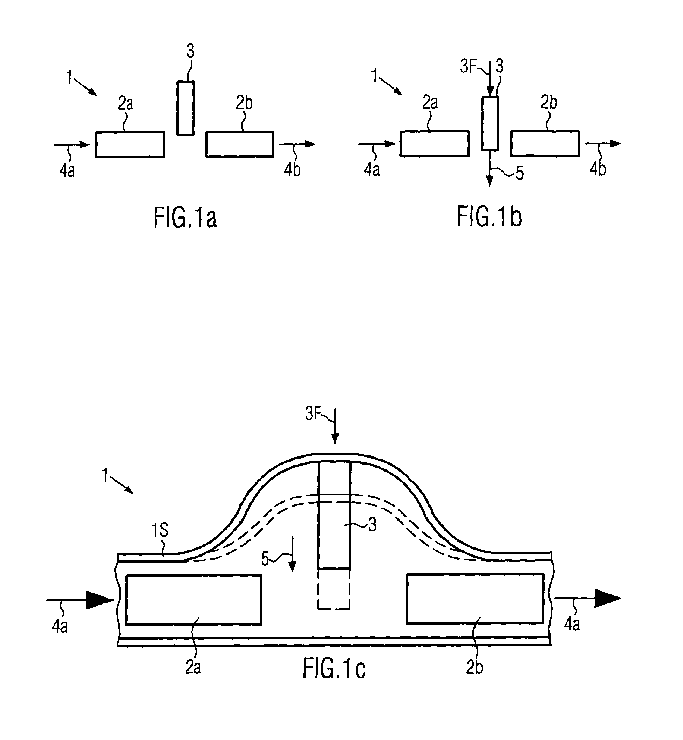

A first embodiment of an optical transducer according to the present invention will be described in the following with reference to figures 1a and 1b.

In figures 1a and 1b, reference 1 identifies an optical transducer of the kind suitable for the detection and/or measurement of transversal forces (pressure); in particular, the optical transducer 1 of figures 1a and 1b comprises two optical fibers 2a and 2b disposed consecutively so as to define an optical path adapted to transmit optical signals (light). The optical fibers 2a and 2b are disposed so as to define a gap between the first optical fiber 2a and the second optical fiber 2b; both the first optical fiber 2a and the second optical fiber 2b are adapted to receive and to emit optical signals. The optical transducer 1 further comprises optical means 3 adapted to be reciprocated in the gap between the optical fibers 2a and 2b along the direction indicated by the arrow 5 in figure 1b. Moreover, in figures 1 a and 1b, references 4a and 4b identify optical signals entering the optical fiber 2a and exiting the optical fiber 2b, respectively. The optical means 3 may comprise any means adapted to constitute an obstacle and/or an interference for the optical signals transmitted through the optical path defined by the optical fibers 2a and 2b, so as to modify the transmission of the optical signals through the optical path. For instance, the optical means 3 may comprise an optical filter either totally opaque or with a graded absorption profile so as to at least partially absorb the optical signals along the optical path.

The working principle of the optical transducer 1 depicted in figures 1 a and 1b is based on the gradual insertion of the optical means 3 in between the two facing optical fibers 2a and 2b. In absence of any applied force (figure 1a), no obstacles are present in between the two fibers 2a and 2b and the incoming optical signal 4a in fiber 2a is coupled to the output optical fiber 2b; that means that, with the exception of a certain loss due to the diffraction through the gap the optical signal intensity 4b exiting the optical fiber 2b essentially corresponds to the optical signal intensity 4a entering the optical fiber 2a. Upon application of a force, for instance the transversal force 3F depicted in figure 1b, the optical means 3 are gradually inserted in between the two facing optical fibers 2a and 2b (see figure 1b), constituting an obstacle that modifies the transmission of the optical signal through the optical path; in other words, the optical signal intensity 4b exiting the optical fiber 2b is reduced with respect to the optical signal intensity 4a entering the optical fiber 2a in proportion to or as a function of the position of the optical means 3 in between the two optical fibers 2a and 2b; in turn, the difference between the two optical signals 4b and 4a (for instance, the differences relating to the intensity of the two signals) can be made dependent on the magnitude of the force 3F acting on the optical means 3. For instance, this can be done using suitable resilient means that hinder the movement of the optical means 3; an example of suitable resilient means will be described in the following with reference to figure 1 c. Of course, the resilient means must have a proper elastic constant to be chosen according to the range of forces to be monitored.

In the embodiment depicted in figures 1 a and 1b, the two optical fibers 2a and 2b are firmly fixed and only the optical means 3 (the optical filter) is moving as a result of an applied force. However, embodiments are also possible in which the situation depicted with reference to figures 1 a and 1 b is reversed; for instance, embodiments are also possible in which the forces act on one or both of the optical fibers 2a and 2b whilst the optical means 3 are firmly fixed.

Moreover, a suitable lens system may be used to expand the optical signal and then to re-focus it in order to reduce the critical aspects of the mechanical assembly; lens systems suitable for this purpose are well known to those skilled in the art and will not be described in more detail, accordingly.

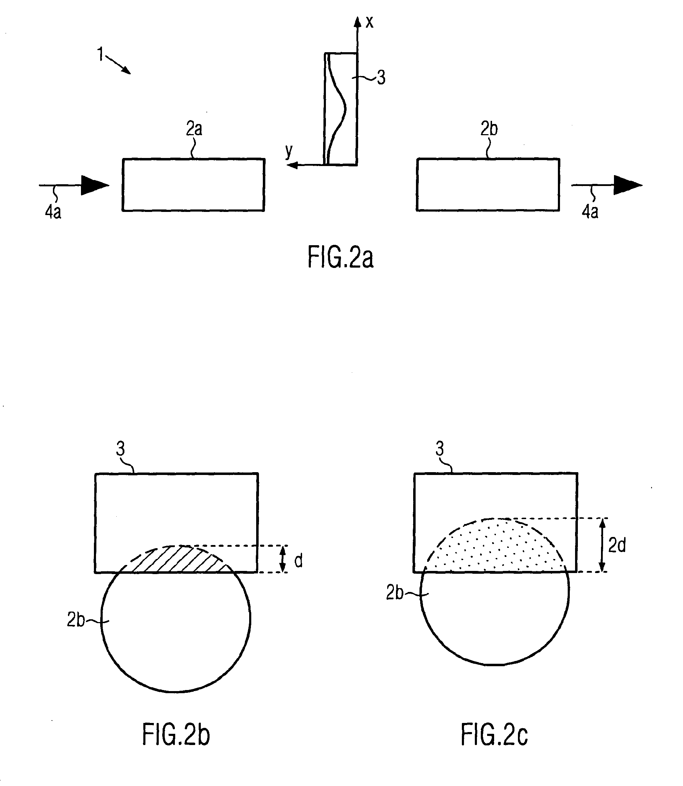

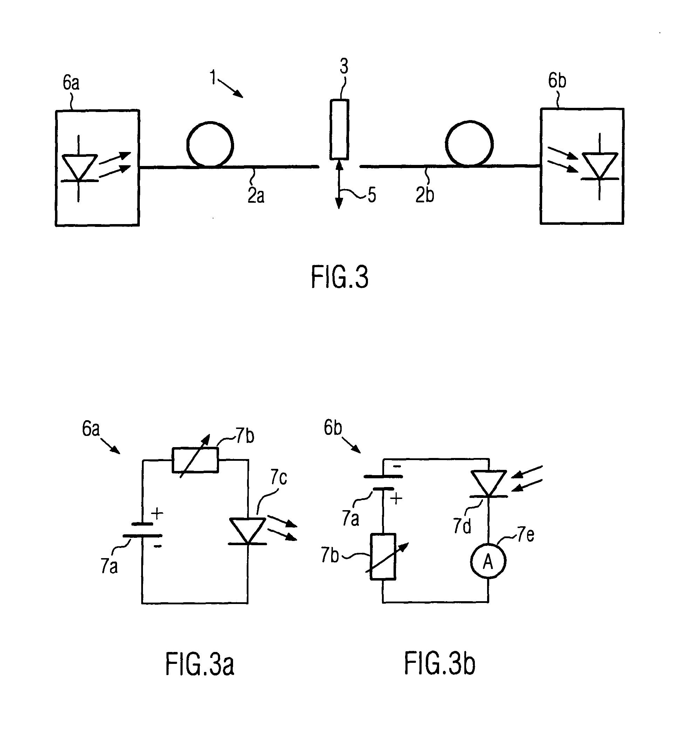

As stated above, the optical filter 3 may be either totally opaque or have a graded absorption profile designed to control more accurately the resolution of the reading. An example of a filter with a graded absorption profile is depicted in figures 2a to 2c; in particular, in figure 2a, the absorption profile of the filter is depicted with reference to a coordinate system X,Y superimposed to a cross section of the filter 3. In figure 2a, the Y axis lies parallel to the direction of propagation of the optical signal through the optical path; the X axis is perpendicular to the Y axis and lies on the plane of the figure; the Z axis is perpendicular to both the X and Y axis. The absorption profile of the optical filter 3 is such that the absorption rate is at a maximum at both opposite edges of the optical filter 3 and decrease until a minimum in correspondence of the central portion of the optical filter 3; it is assumed that the absorption rate remains constant along the Z axis. The reason why it may be convenient to use an optical filter with a graded absorption profile of the kind depicted in figure 2a are apparent from figures 2b and 2c; in figures 2b and 2c, there is depicted a cross section of the set up of figure 2a on a plane perpendicular to the plane of the figure 2a and lying in the space between the optical filter 3 and the right optical fiber 2a. When, as depicted in figure 2b, the filter is inserted in the air gap between the two optical fibers 2a and 2b (due to a force acting on it) to a depth d, a predefined portion (the dashed portion in figure 2b) is masked by the filter 3; accordingly, in the case of a totally opaque filter, a corresponding portion of the optical signal transmitted through the optical path is absorbed by the filter 3. However, in the case of a displacement of the filter 3 as depicted in figure 2c to a depth 2d (twice the distance d of figure 2b) a portion of the cross sectional surface of the optical fiber 2a is masked or covered by the filter 3 (the dotted portion of figure 2c), with said portion being more than twice the dashed portion of figure 2b. Accordingly, the portion of optical signal absorbed by the filter 3 is more than twice the portion absorbed in the case of the displacement d of figure 2b. If it is assumed that the displacement d and 2d correspond to two forces F and 2F, respectively, acting on the filter 3, it is appreciated that in the case of a totally opaque filter the relationship between the absorption rate of the optical signal and the corresponding force acting on the filter, i.e. on the transducer 1, is nonlinear. On the contrary, using an optical filter with an absorption rate of the kind depicted in figure 3, a direct proportionality (linear relationship) may be established between the absorbed optical power and the forces acting on the transducers, since the varying the absorption rate of the filter may be used for compensating the differences between the portions of the fiber optic 2a masked by the filter.

In the following, with reference to figure 1 c, an example will be disclosed of resilient means adapted to be used in combination with the set up depicted in figures 1a and 1b for the purpose of hindering the movement of the filter 3. In figure 1 c, the optical fibers 2a and 2b, as well as the optical filter 3 are received inside a resilient sleeve 1s; for instance, the resilient sleeve 1s may be made of an elastic material such as plastic, gum or the like. In the example of figure 1c. the filter 3 is firmly fixed to the resilient sleeve 1s; due to the elastic properties of the resilient sleeve 1s, the resilient sleeve 1s exerts a reaction force against the force 3F acting on the transducer. Moreover, the resilient sleeve 1s has a proper elastic constant, so that a relationship may be established between the displacement of the sleeve (and, in turn, of the optical filter 3) and the force 3F acting on the transducer. Since, as explained above, a relationship also exists between the displacement of the optical filter 3 and the optical signal absorbed by the filter 3 (or that exiting the optical path), it appears clearly that a relationship may also be established between the optical signal absorbed by the filter (or that exiting the optical path) and the force 3F acting on the transducer. The space between the resilient sleeve 1s and the optical fibers 2a and 2b may eventually be filled with a filling substance, according to the circumstances. Of course, other resilient means may be provided among those known to the skilled person, without departing from the scope of the present invention. For instance, a resilient coil may be disposed below the filter 3; since well known resilient means may be used, said resilient means are not described in more detail in the present application.

In the following, with reference to figure 3, an example of the electrical layout of a measuring device exploiting the working principle of the present invention will be described; in figure 3, those parts already described with reference to previous figures are identified using the same reference numerals.

In figure 3, references 6a and 6b identify an optical signals emitting device and an optical signals receiving device, respectively. The device 6a generates and/or emits optical signals which enter the optical fiber 2a and are transmitted through the optical path defined by the optical fibers 2a and 2b, where they are eventually partially or totally absorbed by the filter 3. The resulting optical signals exiting the opposite end of the optical fiber 2b are received by the receiving device 6b. For instance, the emitting device 6a may comprise a current or voltage generator connected to a LED light source; in the same way, the receiving device 6b may comprise an amplified photo-detector made with a photo diode followed by a low noise amplifier. However, many solutions may be adopted for the purpose of generating optical signals entering the optical path and for the purpose of receiving the optical signals exiting the optical path. For the present invention to be exploited, it is only essential that either current or voltage signals are converted into optical signals entering the transducer, and that the optical signals exiting the transducers are converted into either current or voltage signals, so that the resulting current and/or voltage signals may be elaborated for the purpose of detecting the force acting on the transducer.

In the following, with reference to figures 3a and 3b, examples will be described of an emitting device and a receiving device, respectively, adapted to be used in combination with the optical transducer according to the present invention.

The emitting device 6a depicted schematically in figure 3a comprises a voltage source 7a, a variable resistor 7b and a light emitting LED 7c; in this way, the current flowing through the circuit and entering the LED 7c is converted into optical signals adapted to enter the optical transducer as depicted in figure 3. In the same way, the receiving device 6b depicted in figure 3b comprises a voltage source 7a, a resistor 7b and a photo-diode 7d that converts the incident optical signals into current signals; by means of the measuring device 7e, the resulting current may be measured. It has, however, to be noted that the emitting device and receiving devices 6a and 6b depicted in figures 3a and 3b, respectively, only represent two possible examples of devices adapted to be used in combination with the transducer according to the present invention. Of course, alternative or different solutions may be used among those known in the art and without departing from the scope of the present invention; for instance, according to the circumstances, the optical signals may be converted into voltage signals and a voltage measuring device 7e may be used for measuring the outcoming voltage signals.

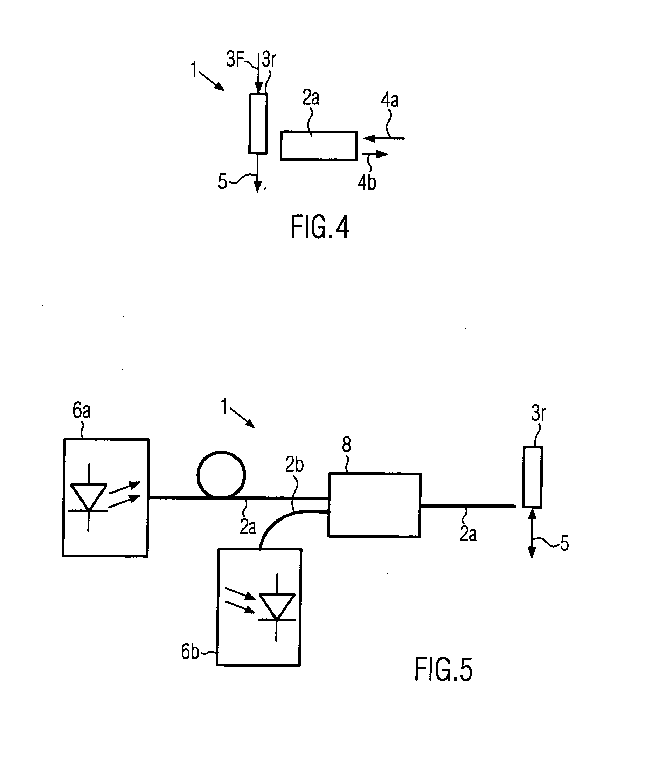

The optical transducer described with reference to figures 1 a and 1b requires that two optical fibers (one for the incoming and one for the outgoing optical signals) are disposed consecutively and brought to the sensing region under test together with the optical means (filter) therebetween; however, depending on the circumstances, it may be highly desirable to further reduce the final size and/or dimensions of the optical transducer; this, in particular, can be obtained by using appropriate optical means as explained in the following with reference to figure 4.

In the embodiment depicted in figure 4, the optical transducer 1 comprises a unique optical fiber 2a and optical means 3r adapted to be reciprocated in proximity of the optical fiber 2a along the direction identified using the arrow 5. If appropriate optical means 3r are used such as, for example, optical reflective means (mirror) the optical signal 4a entering the unique optical fiber 2a may also be at least partially captured and/or received by the same optical fiber 2a. It appears, in fact, clearly that if a mirror is brought into proximity of one end of the optical fiber 2a, with said mirror 3r being adapted to be reciprocated in the direction of the arrow 5 as a result of a force 3F acting on it, the optical signal entering the optical fiber 4a and transmitted by said optical fiber 2a will be at least partially reflected by the optical mirror 3r as soon as said optical mirror will have been moved by the action of the force 3f acting on it so as to at least partially mask and/or cover the cross sectional surface of the optical fiber 2a; in particular, the portion of optical signal reflected by the mirror 3r and therefore, entering again the optical fiber 2a will depend from the portion of the cross sectional surface of the optical fiber 2a illuminated by the mirror. In this way, and similarly to the case of the transducer depicted in figures 1a and 1b, a relationship may be established between the optical signal 4b reflected by the mirror 3r and exiting the optical path and the force (or its intensity) 3F acting on the optical mirror 3r. However, since, in this case, the optical path is defined by the unique optical fiber 2a, the solution depicted in figure 4 may allow the reduction of the final dimension and size of the transducer. In a way similar to the solution depicted in figures 2a to 2c, the optical mirror 3r of the transducer 1 depicted in figure 4 may be either a totally reflecting filter or a filter with a graded reflecting profile, for instance with a reflective profile as depicted in figure 2a. It has also to be noted that also for the transducer depicted in figure 4, a resilient sleeve similar to that depicted in figure 1c, may be used for the purpose of receiving the optical fiber 2a and the optical mirror 3r, so as to provide the resilient force needed for acting against the incident force 3F.

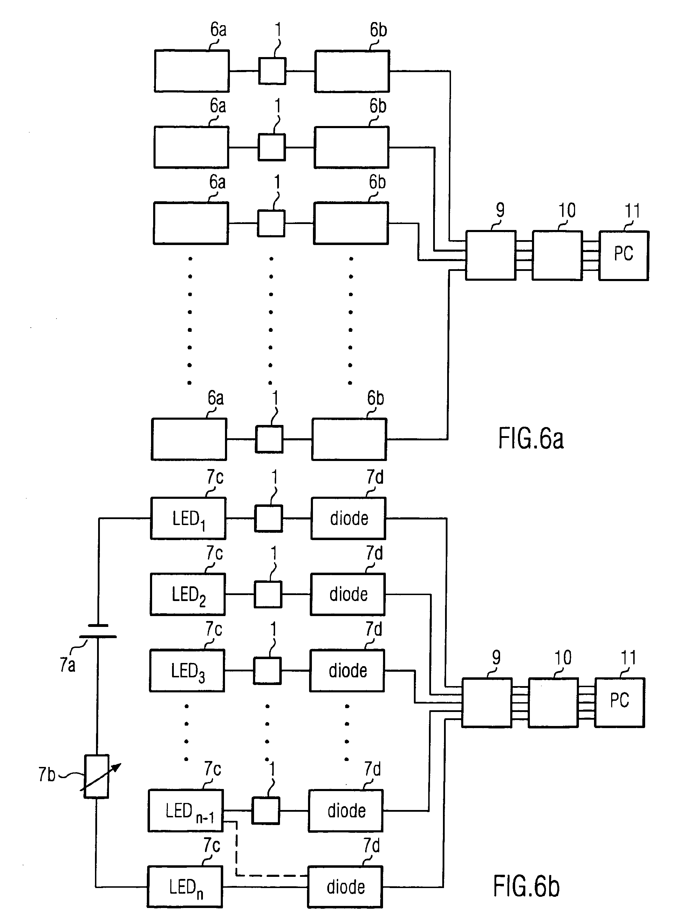

An example of a possible layout of a measuring device implementing the optical transducer of figure 4 will be described in the following with reference to figure 5.

The measuring device depicted in figure 5 is essentially similar to the electrical device already described with reference to figure 3; in particular, in figures 3 and 5, corresponding parts are identified using the same reference numerals. The most important difference between the measuring device of figure 5 and that of figure 3 relates to the fact that the circuit of figure 5 comprises a coupler 8 adapted to separate the incident optical signals from the optical signals reflected by the optical mirror 3r; it appears, therefore, clearly from figure 5 that the emitting device 6a generates and/or emits optical signals which then enter the optical path defined by the optical fiber 2a; after interaction (reflection) with the optical mirror 3r, the resulting optical signals enter the optical fiber 2a in the opposite direction and are finally received by the receiving device 6b. The resulting current and/or voltage signals generated by the device 6b may then be used for the purpose of detecting the force acting on the transducer. In the layout depicted in figure 5 an emitting device and a receiving device of the kind depicted in figures 3a and 3b, respectively, may be used; however, as stated above, also alternative or different solutions may be used to this end without departing from the scope of the present invention.

Both the optical transducers of figures 1a, 1b and 4 (in the following also referred to as transmission and reflection based transducers, respectively) may be used for essentially local reading only, i.e. for detecting forces acting on single points or very small regions. However, the low fabrication costs of the transducers coming from the possibility to use a standard off-the-shelf electronic and intrinsically inexpensive opto-electronic components (such as LEDs and photo-diodes) also allow to provide multiple-fiber sensing probe to measure the force distribution in a predefined number of points; in particular, this can be done simply by replicating many times one or both of the two transducers described above with reference to figures 1a, 1b and 4, respectively, together with the related electrical and/or electronic equipment for the light signal generation and detection. An example of a possible multiple-fiber sensing probe exploiting multiple transducers according to the present invention will be described in the following with reference to figure 6a.

In figure 6a, reference 6a identifies corresponding emitting devices adapted to emit optical signals; for instance, the emitting devices 6a may be of the kind described with reference to figure 3a. Reference 1 identifies optical transducers; these optical transducers may either be of the kind described with reference to figures 1 a and 1b or of the kind described with reference to figure 4. Reference 6b identifies receiving devices, for instance a receiving device of the kind described with reference to figure 3b. Moreover, reference 9 identifies a voltage or current amplifier while reference 10 identifies a device (for instance a DAQ digital acquisition board) adapted to convert current and/or voltage signals into digital signals. Finally, reference 11 identifies a computing unit adapted to elaborate digital data. The optical signals emitted by the emitting devices 6a enter the optical transducers 1 and, after having been modified as a result of the force acting on the transducers are received by the receiving devices 6b. The resulting outcoming current and/or voltage signals are collected by the amplifier 9, adequately amplified to a predefined value and filtered. The amplified signals are then converted by the device 10 into digital signals and transmitted to the computing unit (for instance a PC). In this way, several transducers may be controlled simultaneously, so that it is possible to devise also complex networks of sensors. Moreover, the program can evaluate the measurement results, plot the variations of the forces with time and issue a warning if the reading increases over a predefined threshold. Moreover, using suitable software, it is also easy to control the transducers via the web using standard protocols such as, for instance TCP/IP.

Another example of a possible multiple-fiber detecting and/or measuring equipment exploiting optical transducers according to the present invention will be described in the following with reference to figure 6b where parts already described with reference to previous figures are identified using the same references.

In figure 6b, a plurality of LEDs 7c is used, connected in series with a voltage source 7a and a resistance 7b. It appears, therefore, clearly that the LEDs 7c define, in combination with the voltage source 7a and the resistance 7b, a multiple channel emitting device of the kind depicted in figure 3a. During operation, the optical signals emitted by the LEDs 7c enter the corresponding optical transducers 1 and, after having been modified as a result of the forces acting on the transducers are collected by the n-diodes 7d and then converted into either current or voltage signals. The resulting current and/or voltage signals exiting the diodes 7d are then amplified and filtered by the amplifier 9, forwarded to the converting means 10 where they are converted into digital signals and finally forwarded to the computing unit 11 where they can be opportunely elaborated. The most important difference between the set up of figure 6b and that of figure 6a relates to the fact that one of the LEDs 7c (the LED/n in the case of figure 6b) is directly connected to a corresponding diode 7d; this solution is, in particular, adapted for compensating the detection and/or measurement for the fluctuations of the light source, so as to increase the resolution of the detecting and/or measuring equipment. This, in particular, is due to the fact that the optical signals emitted by the LED/n are not influenced or modified by any transducer but are directly transmitted to the corresponding diode 7d; the LED/n and the corresponding diode experience the same fluctuations as the other channels of the measuring equipment and, therefore, may be used as a reference point. The solution has proved to give quite accurate results without requiring additional more expensive optical components; however, depending on the circumstances, more accurate results may be achieved with additional coupler to drop a small percentage of the light from the source for monitoring purposes. It is also possible to devote another channel of the measuring equipment to acquire the environmental temperature from a low cost commercial integrated electronic temperature sensor (for instance a TMP35 from Analogue Devices) allowing for compensation of the temperature effects, supposing that the various transducers are roughly at the same temperature. More accurate compensations including not only temperature effects but also humidity, unwanted strain, aging etc, can be obtained by connecting the reference LED to its photodiode through an uninterrupted reference fiber running parallel to the monitoring fiber.

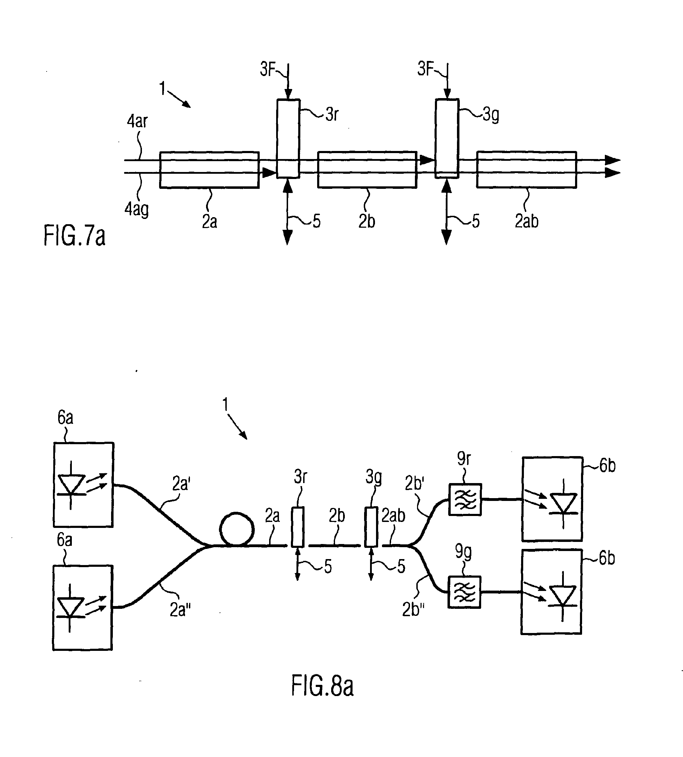

When the points to be monitored and the corresponding forces to be detected acting on them become quite numerous, it may be difficult to pack all the optical transducers within the same measuring equipment. In these cases, however, it is possible to reduce the number of optical transducers and to use the same transducer for detecting multiple forces acting on corresponding multiple points; an example of an optical transducer according to the present invention allowing to detect multiple forces will be described in the following with reference to figure 7a, where component parts already described with reference to previous figures are identified using the same references.

The optical transducer 1 depicted schematically in figure 7a comprises three optical fibers 2a, 2b and 2ab disposed consecutively so as to define an optical path. Moreover, references 4ar and 4ag identify two optical signals entering the optical path; finally, references 3r and 3g identify optical means adapted to be reciprocated in the gaps between the optical fibers 2a and 2b and between the optical fibers 2a and 2ab, respectively, as a result of forces 3F acting on them. The optical means (for instance optical filters) 3r and 3g may be reciprocated along the direction identified by the arrows 5. For the purpose of detecting the forces 3F by means of the transducer 1 depicted in figure 7a, two optical signals at different wavelengths, for instance red and green, are launched into the optical fiber 2a. In this embodiment, the optical filters 3r and 3g are band-pass filters centered at the red and green wavelength, respectively. Upon application of the force 3F on the first optical mirror 3r (representing the first sensing point), the progressive insertion of the filter 3r, being centered at the red wavelength, gradually reduces the transmission of the green wavelength signal without affecting the red wavelength signal (or at least not in a significant way). On the other hand, the progressive insertion of the filter 3g as a result of the force 3F acting on it gradually reduces the transmission of the red wavelength signal without significantly affecting the green wavelength optical signal. It results, therefore, that the intensity of the optical signals exiting the final optical fiber 2ab differ from the intensity of the optical signals 4ar and 4ag which entered the optical fiber 2a as a function of the position assumed by the filters 3r and 3g, respectively, as a result of the forces acting on them. Accordingly, similarly to the cases depicted in figures 1a, 1b and 4, a relationship may be established between the outcoming signals and the forces acting on the transducer. Of course, the solution described above with reference to figure 7a may be applied in principle to an arbitrary number of sensing points or acting forces for each optical transducer.

A possible embodiment of a measuring device exploiting the optical transducer described above with reference to figure 7a will be described in the following with reference to figure 8a where component parts already described with reference to previous figures are identified using the same references. Accordingly, references 6a and 6b in figure 8a identify emitting and receiving devices, respectively, essentially of the same type as described with reference to figures 3a and 3b; moreover, references 2a, 2b and 2ab identify the optical fibers of figure 7a, whilst references 3r and 3g identify the optical filters. The most important difference between the measuring device of figure 8a and the measuring device, for instance, of figure 3 relates to the fact that the emitting devices 6a are adapted to emit optical signals of a predefined wavelength, in particular red and green in the embodiment depicted in figure 8a. Optical signals emitted from the two red and green emitting devices 6a enter the optical fibers 2a' and 2a" and are subsequently combined using a 3dB Y-junction (or a coupler) to obtain a sort of a coarse wavelength division multiplexing (C-WDM). Then, the signal transmitted through the transducer 1, after having been eventually modified by the filters 3r and 3g, are demultiplexed by a 3dB splitter (or coupler) and transmitted through the optical fibers 2b' and 2b" to corresponding band-pass filters 9r and 9g, respectively, that are centered at the green and red wavelengths. In this way, the receiving device 6b is sensitive to a particular wavelength only.

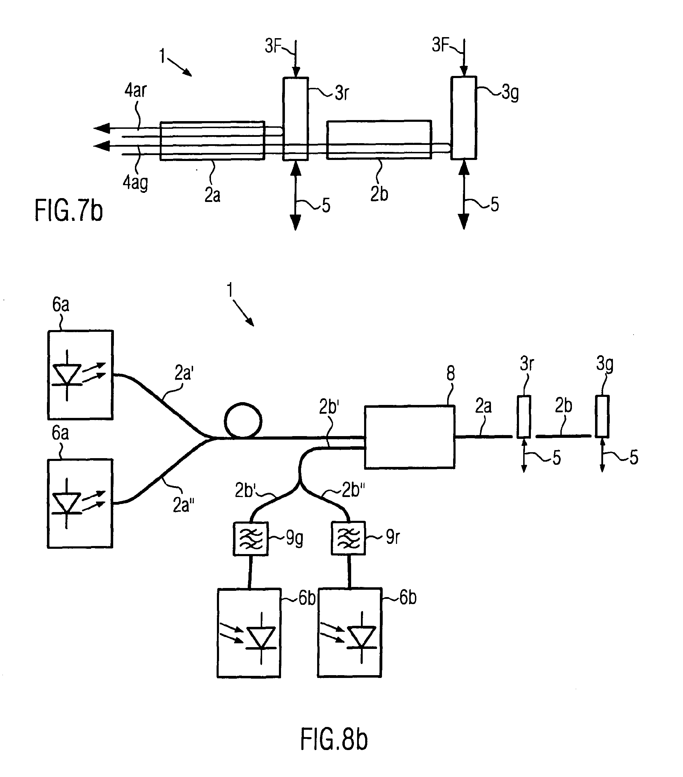

In the following, with reference to figure 7b, the description will be given of an optical transducer according to another embodiment of the present invention, allowing the detection or measurement of a plurality of forces acting on a plurality of corresponding sensing points; in particular, the description will be given of an optical transducer allowing the detection and/or measurement of two forces acting on two corresponding sensing points.

The optical transducer depicted in figure 7b is essentially similar to the optical transducer described above with reference to figure 7a; the most relevant difference between the transducers of figure 7b and 7a relates to the fact that, in the transducer of figure 7b, the movable optical means used for modifying the optical signals transmitted through the optical path of the transducer are of the kind allowing to at least partially reflect optical signals of corresponding, predefined wavelengths; this is the reason why the optical transducer of figure 7b will also be referred to in the following as a reflection based transducer. In figure 7b, references 2a and 2b identify corresponding optical fibers disposed consecutively with a gap therebetween so as to define an optical path; moreover, references 3r and 3g identify first and second optical reflecting means, for instance optical mirrors. The first optical mirror 3r is adapted to be reciprocated along the direction identified using the arrow 5 in the gap between the first optical fiber 2a and the second optical fiber 2b as a result of a first force 3F acting on it; in a similar way, the optical mirror 3g is adapted to be reciprocated in the direction of the arrow 5 in proximity of the end portion of the second optical fiber 2b (the end portion opposite to the gap between the two optical fibers) as a result of a force 3F acting on it. References 4ar and 4ag identify two optical signals of two corresponding, different wavelengths, say red and green, entering the optical path defined by the two optical fibers 2a and 2b. For instance, the optical signals 4ar and 4ag may be emitted and/or generated by corresponding emitting devices of the kind described with reference to figure 3a. The two optical mirrors 3r and 3g are each adapted to at least partially reflect optical signals of a particular wavelength; in the embodiment described, the first optical mirror 3r is adapted to reflect red optical signals, without affecting the signals of different wavelengths, whilst the second optical mirror 3g is adapted to at least partially reflect green optical signals, also without affecting optical signals of different wavelengths. That means that the transmission of optical signals of a wavelength other than red is not modified by the optical mirror 3r but the signals are transmitted to the optical path. When the two red and green optical signals 4ar and 4ag enter the optical transducer 1 as depicted in figure 7b, the progressive insertion of the filter 3r as a result of a force 3F acting on it gradually increases the reflection of the red optical signal 4ar without affecting the green optical signal 4ag. Accordingly, a relationship may be established between the portion of the red optical signal reflected by the mirror 3r and the force 3F acting on said mirror 3r. On the other hand, upon application of the force 3F on the second mirror 3g (the second sensing point), the progressive insertion of the filter 3g gradually increases the reflection of the green optical signals 4ag without affecting the red optical signals 4ar. A relationship, therefore, may be established between the portion of the green optical signal reflected by the mirror 3g and the force 3F acting on the mirror 3g. It results, therefore, that by opportunely selecting both the wavelengths of the optical signals entering the transducer and the reflection properties of the mirrors, a transducer may be realized allowing the detection of multiple forces; in particular, in this respect, it has to be noted that even if an example of such a transducer has been described with reference to figure 7b allowing the measurement of two forces, the transducer described may also be used for the purpose of measuring more than two forces.

The electrical layout of a measuring equipment exploiting and/or implementing the optical transducer of figure 7b is similar to that described above with reference to figure 8a; such a measuring equipment will be described in the following with reference to figure 8b, where identical parts already described with reference to previous figures are identified using the same references.

In the layout of figure 8b, optical signals (red and green signals in this particular case) emitted and/or generated by the emitting devices 6a (for instance emitting devices of the kind depicted with reference to figure 3a) enter the optical fibers 2a' and 2a", respectively, which are joined by a Y-junction (or a coupler); the combined signals then enter the optical transducer 1 (the optical fiber 2a) through a coupler 8.

After reflection with one of the two filters 3r and 3g, the red and green optical signals are brought to the lower arm of the coupler 8 (the optical fiber 2b') and split to two corresponding receiving devices 6b through the optical fibers 2b' and 2b" and the two passing through 2 band-pass filters 9g and 9r, centered at the red and green wavelengths, respectively. In the receiving devices 6b, the optical signals as received are converted into either current or voltage signals; to this end, the receiving devices 6b may be of the kind described with reference to figure 3b. The use of band-pass filters 9g and 9r, centered at the red and green wavelengths, respectively, allows each receiving device 6b to be sensitive to a particular wavelength only; accordingly, one of the receiving devices 6b detects the variation of the force acting on one of the optical mirrors (on one of the two sensing points of the transducer) whilst the second receiving device 6b detects the variation of the force acting on the other optical mirror (on the other sensing point of the transducer). Depending on the spacing between the wavelength used, a broadband coupler 8 may be used for the purpose of improving the performances of the measuring equipment depicted in figure 8b; however, other variations using narrow band couplers are also possible.

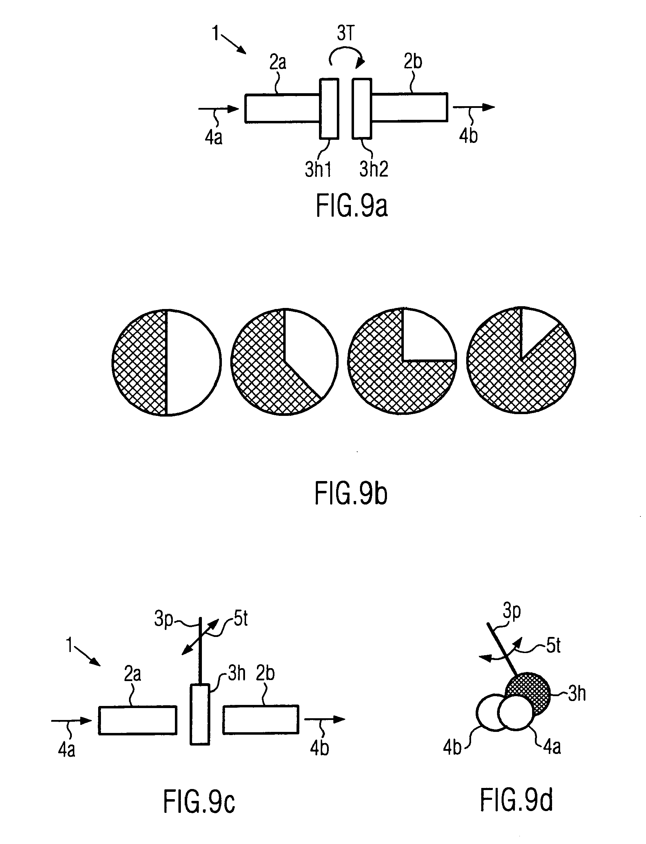

In the following, with reference to figure 9a, a further embodiment of an optical transducer according to the present invention will be described allowing the detection and/or measurement of rotational forces (torques).

In figure 9a, parts already described with reference to previous figures are identified using the same references; accordingly, in figure 9a, references 2a and 2b identify two optical fibers disposed consecutively with a gap therebetween so as to define an optical path. Moreover, reference 4a identifies an optical signal entering the optical path, whilst reference 4b identifies an optical signal exiting the optical path. Finally, references 3h1 and 3h2 identify corresponding movable optical means adapted to be moved as a result of a rotational force 3T acting on the transducer 1 of figure 9a. In the example depicted in figure 9a, the optical means 3h1 and 3h2 comprise two optical filters, respectively, firmly fixed to the two opposite end portions of the optical fibers 2a and 2b, respectively, facing the gap between the two optical fibers; in this way, in the case of a rotational force 3T acting on the transducer, one or both of the two filters 3h1 and 3h2 are rotated on their own axis, essentially parallel to the direction of transmission of the optical signal 4a through the optical path. The filters 3h1 and 3h2 are designed so as to have one half of the surface opaque and one half transparent (clear). Upon rotation of either one of the two fibers 2a or 2b or one of the two filters 3h1 or 3h2 as a result of a force 3T acting on the transducer, the optical signal 4b exiting the optical path (the transducer) changes with respect to the optical signal 4a entering the transducer due to the different shape of the clear area originated by the superposition of the two filters 3ah1 and 3h2. Accordingly, assuming that the two filters 3h1 and 3h2 have an ideal behavior (the clear regions introduce a negligible attenuation of the optical signals, the opaque area introduces a 100% attenuation of the optical signals) a relationship may be established between the intensity of the optical signal 4b exiting the transducer and the force 3T acting on it; in particular, this may be obtained by using resilient means adapted to hinder the rotation of the filters 3h1 and 3h2 or of the optical fibers 2a and 2b, with said resilient means having a proper elastic constant chosen according to the range of the rotational forces to be monitored. For instance, said resilient means may comprise a resilient sleeve 1 s of the kind depicted in figure 1 c, with said resilient sleeve 1 s receiving and/or housing the optical transducer 1. Summarizing, the working principle of the optical transducer described above with reference to figure 9a relates to the fact that the optical signal 4a transmitted through the optical path is attenuated as a function of the superposition of the two filters 3h1 and 3h2; since, in turn, the superposition of the two filters 3h1 and 3h2 depends on the rotational force 3T acting on the transducer, it results that a relationship may be established between the intensity of the optical signal exiting the transducer and the force acting on the transducer, thus rendering the transducer suitable for the measurement and/or the detection of rotational forces, such as for example torques. A suitable lens system may also used in combination with the transducer of figure 9a to expand the optical signal and then to refocus it in order to reduce the critical aspects of the mechanical assembly. Moreover, a suitable mechanical system (for instance using cantilevers) may be used in order to enhance the sensitivity to small rotations.

In figure 9b, there is depicted an example where the superposition of the two filters 3h1 and 3h2 is pictured for some rotation cases. In particular, the left most case in figure 9b corresponds to the situation of no forces acting on the transducer, thus resulting in the clear and opaque portions of the two filters being perfectly aligned. The signal attenuation corresponds therefore to 50% of the incoming signal 4a. When a force 3T acts on the transducer, clear and opaque portions of the two filters get misaligned and the corresponding resulting opaque portion increases as depicted from the second picture from the left to the right most picture in figure 9b. The attenuation of the optical signal, therefore, also increases resulting in a decreasing signal exiting the transducer till the signal is completely absorbed in the case (not depicted in figure 9b) that the filters are reciprocally rotated by 180°.

In the following, with reference to figures 9c and 9d, an example will be described of an optical transducer according to the present invention adapted to be used as an inclinometer, i.e. for measuring inclinations resulting from rotational forces acting on the transducer; again, in figures 9c and 9d, parts already described with reference to previous figures are identified using the same references.

In figures 9c and 9d, reference 3h identifies an opaque filter adapted to be moved in the gap between the two consecutive optical fibers 2a and 2b defining the optical path. The filter 3h is fixed like a pendulum to a fixing point 3p. In the case of no forces acting on the transducer, the filter is aligned with the optical path, so that the optical signal 4a entering the optical path is completely attenuated (assuming that the optical filter 3h has an ideal behavior); on the contrary, in the case of forces 5r acting on the transducer, the filter 3h becomes misaligned from the optical path as depicted in figure 9d, thus allowing at least a portion of the optical signal 4a to be transmitted through the optical path. Accordingly, a relationship may be established between the optical signal 4b exiting the optical path (the transducer) and the inclination of the transducer.

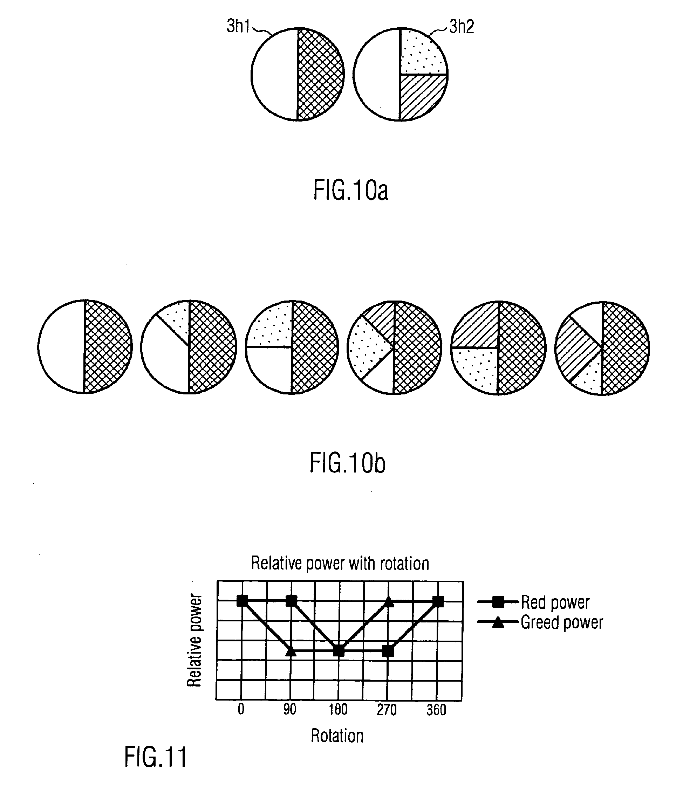

The optical sensor described above with reference to figures 9a and 9b may detect rotations only up to 180° because it does not take into account the rotation sense or, in other words, it cannot distinguish between clockwise and counter-clockwise rotations. This limitation can be overcome by combining the optical transducer described above with reference to figures 9a and 9b with band-pass filters (color filters) similar to those used for the optical sensors described above with reference to figures 7a and 7b. An example of band-pass filters adapted to be used in an optical transducer of figure 9a for the purpose of allowing said transducer to detect rotation up to 360° will be described in the following with reference to figures 10a and 10b.

In the case depicted in figure 10a, the filters are slightly more complex than those depicted in figure 9a. In particular, the filter 3h1 has a half-clear half-opaque surface (left part of figure 10a) whilst the other filter 3h2 has 50% of its surface clear, 25% of its surface allowing transmission of optical signals of a first wavelength, said red, and 25% of its surface allowing transmission of optical signals of a second wavelength, said green. The filter 3h2 is depicted on the right side of figure 10a, where the doted portion corresponds to the 25% surface passing red whilst the dashed portion corresponds to 25% surface passing green. Assuming that the two filters 3h1 and 3h2 of figure 10a have an ideal behavior (i.e. the clear regions introduce a negligibility attenuation, the opaque area introduces a 100% attenuation, the red and green parts do not attenuate red and green wavelengths, respectively), the functioning of an optical transducer of the kind as depicted in figure 9a but equipped with the two filters 3h1 and 3h2 of figure 10a can be more easily understood with reference to figure 10b, where a counter-clockwise rotation is depicted supposing that in the absence of any force acting on the transducer, the two filters 3h1 and 3h2 are superimposed by their clear parts.

During the counter-clockwise rotation due to rotational forces acting on the transducer, the variations of the transmission of the red and green signals through the optical path are as follows:
(a) zero rotation (left most case in figure 10b): no attenuation of the red and green signals, that is maximum output power;
(b) rotation up to 90° (second picture from left in figure 10b); no attenuation of the red signals, increasing attenuation of the green signals, i.e. red power still at a maximum, green power decreasing down to its minimum;
(c) exactly 90° rotation (third picture from left in figure 10b): no attenuation of the red signals, maximum attenuation of the green signals, i.e. red power still at the maximum, green power at the minimum;
(d) rotation up to 180° (fourth picture form left in figure 10b): increasing attenuation of the red signals, maximum attenuation of the green signals, i.e. red power decreasing down to its minimum, green power still at the minimum;
(e) exactly 180° rotation (fifth picture from left in figure 10b): maximum attenuation of the red signals, maximum attenuation of the green signals, i.e. red power at the minimum, green power still at the minimum;
(f) rotation up to 270° (sixth picture from left in figure 10b): maximum attenuation of the red signals, decreasing attenuation of the green signals, i.e. red power still at the minimum, green power increasing;
(g) rotation between 270° and 360° (not shown in figure 10b): attenuation of the red signals decreasing, maximum attenuation of the green signals, i.e. red power increasing, green power at the minimum.

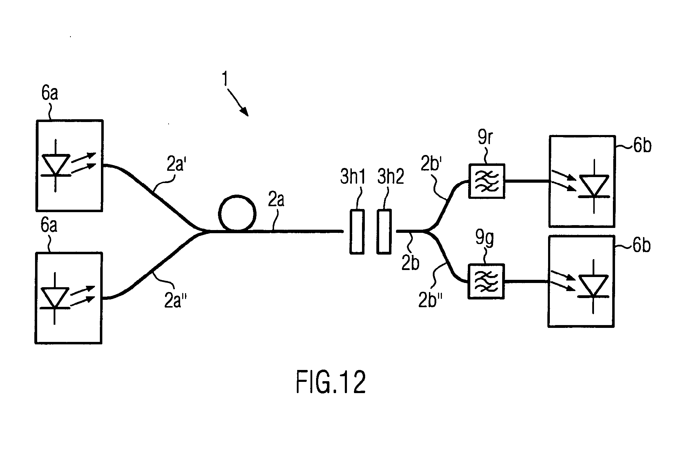

It results, therefore, from the above that the red and green powers measured at the output of the transducer are directly dependent from the superposition of the red/green filter 3h2 fixed to the optical fiber 2b with the clear half face of the filter 3h1 fixed to the optical fiber 2a (see figure 9a). An example of the variation of the red and green power levels at the output of the transducer with the angle of rotation is plotted in figure 11.

Moreover, for a clockwise rotation, green and red powers invert their behavior, so it is clear that suitable software designed to consider the history of the power evolutions is able to identify the sense of rotation and thus the total rotation. Accordingly, since a relationship may be established between the intensity and the sense of rotation of the forces acting on the transducer on the one hand and, on the other hand the superimposition of the two filters, it results that the intensity and the sense of rotation of the forces acting one the transducer may be detected and/or measured starting from the red and green power levels at the output of the transducer and their behavior.

In the following, an example of a measuring equipment exploiting the optical transducer described with reference to figures 9a, 9b, 10a and 10b will be described with reference to figure 12, where parts already described with reference to previous figures are identified using the same references.

In the example of figure 12, optical signals emitted by the emitting devices 6a and entering the corresponding optical fibers 2a' and 2a" are combined using a 3dB Y-junction (or a coupler) to obtain a sort of a coarse wavelength division multiplexing (C-WDM). Then, the optical signals enter the optical path (the optical fibers 2a), are transmitted to the two red and green filters 3h1 and 3h2 and exit the optical path through the optical fiber 2b. The resulting output signals are demultiplexed by a 3dB splitter (coupler) and transmitted through the filters 2b' and 2b" to the two band-pass filters 9r and 9g that are centered at the green and red wavelengths, respectively. The signals are then received by the receiving devices 6b, where they are converted into either current or voltage signals. By using the band-pass filters 9r and 9g, each of the receiving devices 6b is sensitive to a particular wavelength only; for example, one of the receiving devices 6b (the upper one in figure 12) detects the forces acting on the filter 3h1, whilst the second receiving device 6b (the lower one in figure 12) detects the forces acting on the filter 3h1.

Summarizing, it arises from the above disclosure that the optical transducers according to the present invention allow to overcome or at least to minimize the drawbacks affecting the transducers known in the art; in particular, the optical transducers according to the present invention allow to reliably detect both transversal forces (pressures) and rotational forces (torques). Moreover, the optical transducers of the present invention allow to detect and/or to measure both forces acting on a single point and multiple forces acting on corresponding multiple points.

Furthermore, the optical transducers of the present invention are particularly adapted for applications in a critical environment such as in electromagnetical noisy industrial premises, in storage areas of high flammable materials and in structures exposed to electrostatic discharges during thunderstorms. The absence of electrical currents flowing through the transducers makes them also ideal for biomedical applications avoiding the risk of electrocution.

Excellent results have also been obtained by using very high numerical apertures optical fibers such as standard polymer optical fibers (POF) allowing to take advantage of the high acceptable gap between the facing fibers and of the less demanding mechanical tolerances. Moreover, the use of POF implies very low costs in terms of sources, detectors and connectors, besides the advantages common to all the types of optical fiber such as light weight, minimal invasiveness, immunity to electromagnetic interferences and the impossibility to start a fire or explosion.

However, for the purpose of exploiting or realizing the optical transducers according to the present invention, also different optical fibers may be used.

While the present invention has been described with reference to particular embodiments, it has to be understood that the present invention is not limited to the particular embodiments described but rather that various amendments may be introduced into the embodiments described without departing from the scope of the present invention which is defined by the appended claims.

For instance, according to the circumstances, the noise rejection properties of all the embodiments described above may be improved by using the well known lock-in technique that is based on the modulation of the optical source 6a followed at the receiver side by the selective amplification of only the signal component synchronous with the modulating signal. This can be implemented by different means, using either dedicated electronic circuits or proper software elaboration on the acquired data.

## Claims

1. An optical transducer (1) for detecting forces acting on said transducer, said transducer (1) comprising an optical path adapted to transmit optical signals (4a, 4b) therethrough, said optical transducer being
**characterized in that**
it comprises moveable means adapted to be moved as a result of a force (3F, 3T) acting on said optical transducer so as to modify the transmission of said optical signals through said optical path as a function of their position with respect to said optical path.

2. An optical transducer as claimed in claim 1
**characterized in that**
said optical path comprises at least one optical fiber (2a, 2b) and **in that** said means adapted to be moved as a result of said force (3F, 3T) comprises optical means.

3. An optical transducer as claimed in claim 2
**characterized in that**
said optical path comprises first and second optical fibers (2a, 2b) disposed consecutively and both adapted to receive and to emit optical signals (4a, 4b), and **in that** said optical means comprises an optical filter (3) adapted to be reciprocated between said two optical fibers as a result of a transversal force (3F) acting on it so as to at least partially absorb the optical signals exiting said first optical fiber (2a) as a function of its position in between said first and second fibers.

4. An optical transducer as claimed in claim 3
**characterized in that**
said optical filter (3) is totally opaque.

5. An optical transducer as claimed in claim 3
**characterized in that**
said optical filter (3) has a graded absorption profile.

6. An optical transducer as claimed in claim 2
**characterized in that**
said optical path comprises one optical fibers (2a) and **in that** said optical means comprise an optical mirror (3r) disposed in proximity of one end of said optical fiber (4a), said optical mirror being adapted to be reciprocated in a direction substantially as a result of a force (3F) acting on it so as to at least partially reflect the optical signal exiting said optical fiber (4a) as a function of its position with respect to said optical fiber (4a).

7. An optical transducer as claimed in claim 2
**characterized in that**
said optical path comprises at least three optical fibers (2a, 2b, 2ab) disposed consecutively and each adapted to receive and to emit optical signals, and **in that** said optical means comprises at least two optical filters (3r, 3g), each adapted to be reciprocated in between two consecutive optical fibers, as a result of a force (3F) acting on it so as to at least partially absorb the optical signals transmitted through two consecutive optical fibers, as a function of its position in between two consecutive optical fibers.

8. An optical transducer as claimed in claim 7
**characterized in that**
at least one of said at least two filters is a filter adapted to at least partially absorb optical signals of a predefined wavelength.

9. An optical transducer as claimed in claim 8
**characterized in that**
both said optical filters are filters adapted to at least partially absorb optical signals of a predefined wavelength.

10. An optical transducer as claimed in claim 2
**characterized in that**
said optical path comprises at least two optical fibers (2a, 2b) disposed consecutively and each adapted to receive and to emit an optical signal, and **in that** said optical means comprises at least a first and a second optical mirror (3r, 3g) said first and second optical mirror (3r, 3g) being adapted to be reciprocated in between said two consecutive optical fibers (2a, 2b) and in proximity to one end of said second optical fiber (2b), respectively, as a function of a force (3F) acting on them, so as to at least partially reflect optical signals transmitted through said optical path as a function of their position with respect to said optical fibers (2a, 2b).

11. An optical transducer as claimed in claim 10
**characterized in that**
at least one of said first and second optical mirrors is a mirror adapted to at least partially reflect optical signals of a predefined wavelength.

12. An optical transducer as claimed in claim 2
**characterized in that**
said optical path comprises two consecutive optical fibers (2a, 2b) and **in that** said optical means comprises two optical filters (3h1, 3h2) disposed in between said two optical fibers and firmly fixed to the facing end portions of said optical fibers, respectively, at least one of said two filters being adapted to be rotated as a result of a force (3T) acting on said transducer, so that the transmission of the optical signal through the optical path is modified as a function of the reciprocal position of said two filters.

13. An optical transducer as claimed in claim 12
**characterized in that**
at least one of said at least two filters has an opaque portion and the remaining portion is transparent.

14. An optical transducer as claimed in claim 13
**characterized in that**
both said at least two filters have an opaque portion and a transparent portion.

15. An optical transducer as claimed in one of claims 13 and 14
**characterized in that**
the opaque portion corresponds to approximately 50%.

16. An optical transducer as claimed in claim 15
**characterized in that**
the opaque portion of one of said at least two filters comprises at least two subportions adapted to absorb optical signals of a predefined wavelength.

17. An optical transducer as claimed in claim 16
**characterized in that**
each of said at least two subportions corresponds to 25%.

18. An optical transducer as claimed in one of claims 1 to 17
**characterized in that**
it further comprises resilient means connected to said movable means allowing said movable means to exert a reaction force against said force (3F, 3T).

19. An optical transducer as claimed in claim 18
**characterized in that**
said resilient means comprises at least a resilient sleeve (1s) receiving said optical path and said movable means.

20. A measuring device for measuring and/or detecting forces
**characterized in that**
it comprises at least one optical transducer as claimed in one of claims 1 to 17.

21. A measuring device as claimed in claim 20
**characterized in that**
it comprises at least one optical signals emitting device (6a) and one optical signals receiving device (6b) for introducing optical signals into said optical path and receiving optical signals exiting said optical path, respectively, said receiving means being further adapted to convert optical signals into electrical signals.

22. A measuring device as claimed in claim 21
**characterized in that**
said at least one emitting device (6a) comprises at least one LED (7c), and **in that** said at least one receiving device (6b) comprises at least one diode (7d).

23. A measuring system for measuring forces
**characterized in that**
it comprises at least one measuring device as claimed in one of claims 21 to 22.

24. A measuring system as claimed in claim 23
**characterized in that**
it comprises computing means for computing the electrical signals exiting said receiving devices (6b).

25. A measuring system as claimed in one of claims 23 and 24
**characterized in that**
it comprises a plurality of measuring devices and a threshold device adapted to generate threshold signals.
